# EUROPÄISCHE PATENTSCHRIFT

(11) **EP 2 910 110 B1**
(45) Veröffentlichungstag und Bekanntmachung des Hinweises auf die Patenterteilung: **13.12.2017**
(21) Anmeldenummer: 15155937.4
(22) Anmeldetag: 20.02.2015
(51) Int. Cl.: A01G 13/02

(54) **Überdachung für reihenförmig angeordnete Pflanzenkulturen**
Cover for plant cultures arranged in rows
Toit pour cultures végétales disposées en rangées

(30) Priorität: 21.02.2014 DE 102014203196
(43) Veröffentlichungstag der Anmeldung: 26.08.2015
(73) Patentinhaber: BayWa Aktiengesellschaft, 81925 München (DE)
(72) Erfinder: Holzwarth, Rudolf, 88255 Baindt (DE)
(74) Vertreter: Pfiz, Thomas

(56) Entgegenhaltungen:
- DE-A1- 10 349 243
- DE-A1-102009 047 383
- DE-B3- 10 252 468
- DE-U1-202004 020 201
- US-A1- 2004 134 122

## Beschreibung

Die Erfindung betrifft eine Überdachung für reihenförmig angeordnete Pflanzenkulturen mit mehreren in den Pflanzenreihen verteilt angeordneten Stützen, einem längs der Pflanzenreihen über die jeweiligen Stützen gespannten Firstdraht und mindestens einer an dem Firstdraht seitlich über die jeweilige Pflanzenreihe hinweg aufspannbaren, aus einem Folien- und/oder Gewebematerial gebildeten flexiblen Dachbahn.

Aus der DE-A 102 52 468 ist eine derartige Wetterschutzüberdachung vor allem zum Hagelschutz bekannt. Dort werden zur Firstfixierung eines Schutznetzes Verbindungsmittel vorgeschlagen, die jeweils durch ein den Firstdraht ummantelndes Innenteil und ein unter Zwischenklemmen des Schutznetzes auf das Innenteil aufsetzbares Außenteil gebildet sind. Zum Hochraffen des Schutznetzes ist das Außenteil mit Seilkanälen für ein um das Schutznetz zu schlingendes Bindeseil vorgesehen. Das Schließen und Öffnen des Schutznetzes erfordert allerdings einigen Zeitaufwand, so dass eine kurzfristige Anpassung an die Witterungsbedingungen eher aufwendig ist. Aus der DE-U 20 2004 020 201 ist eine weitere ähnliche Wetterschutzüberdachung bekannt. Ausgehend hiervon liegt der Erfindung die Aufgabe zugrunde, die im Stand der Technik bekannten Überdachungsvorrichtungen weiter zu verbessern und eine einfache und flexible Handhabung bzw. Nutzung zu ermöglichen, wobei den klimatischen Anforderungen hinsichtlich der Pflanzenkulturen möglichst optimal Rechnung getragen werden soll.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Schutzabdeckung in der Traufe zu lagern und eine einfach schließbare und lösbare Firstverbindung zu schaffen. Dementsprechend wird erfindungsgemäß vorgeschlagen, dass die Dachbahn an ihrem an dem Firstdraht angeordneten Längsrand einen durchgehenden Firstreißverschluss aufweist, wobei die Dachbahn durch Öffnen des Firstreißverschlusses von dem Firstdraht unter Freigabe der Pflanzenreihe lösbar ist. Dadurch ist eine kurzzeitige Anpassung an die aktuellen Witterung mit geringem Aufwand möglich, wobei durch den Reißverschluss der gesamte Längsrand der Dachbahn lückenlos öffnen- und schließbar ist. Kulturen mit hohen Belichtungsanforderungen können deshalb zureichend belichtet werden, ohne dass ein erhöhtes Risiko im Hinblick auf einen Wetterumschwung in Kauf zu nehmen ist.

Vorteilhafterweise ist der Firstreißverschluss über ein Trägerband an dem Firstdraht gehalten, so dass eine kollisionsfrei und ggf. beidseitig bedienbare Naht geschaffen wird.

Eine weitere Verbesserung sieht vor, dass beidseitig des Firstdrahts jeweils eine Dachbahn über einen zugeordneten Firstreißverschluss an dem Firstdraht gehalten ist.

Um den Handhabungsaufwand weiter zu verringern, ist es vorteilhaft, wenn eine längs des Firstdrahts vorzugsweise automatisch bewegbare Zugvorrichtung zum Öffnen und Schließen des Firstreißverschlusses vorgesehen ist.

Gemäß einer besonders vorteilhaften Ausgestaltung ist es vorgesehen, dass die Dachbahn den Bereich zwischen zwei benachbarten Firstdrähten überspannt und an beiden Längsrändern über einen Firstreißverschluss mit einem Firstdraht verbunden ist. Auf diese Weise lässt sich auch die Fahrgasse zwischen den Pflanzenkulturen vor Niederschlag schützen.

Um Überlastungen zu vermeiden, ist es günstig, wenn die Dachbahn in einem Bereich zwischen benachbarten Firstdrähten mit Durchlassöffnungen zur Ableitung von Hagel oder Regen versehen ist.

Eine weitere Verbesserung hinsichtlich des Bedienungsaufwandes lässt sich dadurch erreichen, dass die Dachbahn unter Öffnen des Firstreißverschluss selbsttätig auf eine Tragkonstruktion in einen Traufbereich zwischen benachbarten Pflanzenreihen ableitbar ist. Dabei ist es auch günstig, wenn die Dachbahn über an den Stützen abgespannte und vorzugsweise dachförmig quer zu dem Firstdraht verlaufende Stützdrähte beim Auf- und Abspannen geführt ist.

Um Beschädigungen der Pflanzen und der Dachbahn zu vermeiden, ist es vorteilhaft, wenn an den Stützen quer zu dem Firstdraht abstehende Leitbügel zur Führung der Dachbahn angeordnet sind.

Gemäß einer weiteren besonders vorteilhaften Variante ist jede Dachbahn an einem von dem Firstdraht entfernten unteren Längsrand in einem bodennahen Bereich vorzugsweise über Gummiseile abgespannt, so dass die Pflanzenreihen von jeder Dachbahn im aufgespannten Zustand halbschalig umhüllt sind und der Bereich zwischen benachbarten Pflanzenreihen nach oben frei bleibt. Auf diese Weise können auch Arbeitsgeräte eingesetzt werden, welche die Pflanzenreihen übergreifen. In diesem Zusammenhang ist es auch vorteilhaft, wenn die Dachbahn unter Schließen des Firstreißverschlusses in die eine Pflanzenreihe überdeckende aufgespannte Stellung bewegbar ist.

Eine weitere Ausgestaltung liegt darin, dass die Dachbahn einen vorzugsweise als Gewebe gitterförmig durchbrochenen Entlüftungsstreifen aufweist, und dass sich der Entlüftungsstreifen über einen Reißverschluss an seinen Längsrändern schließen und öffnen lässt.

Im Folgenden wird die Erfindung anhand der in der Zeichnung schematisch dargestellten Ausführungsbeispiele näher erläutert. Es zeigen:
- Fig. 1: eine Wetterschutzüberdachung für Pflanzenkulturen mit über Firstreißverschlüsse aufspannbaren Dachbahnen in ausschnittsweiser perspektivischer Darstellung,
- Fig. 2: die Wetterschutzüberdachung nach Fig. 1 in einem Vertikalschnitt durch drei Pflanzenreihen quer zur Firstrichtung;
- Fig. 3: eine weitere Ausführungsform einer Wetterschutzüberdachung in einer Fig. 1 entsprechenden Darstellung;
- Fig. 4: die Wetterschutzüberdachung nach Fig. 3 in einem Vertikalschnitt durch zwei Pflanzenreihen quer zur Firstrichtung;
- Fig. 5 und 6: eine ausschnittsweise schaubildliche Darstellung einer Dachbahn mit über einen Reißverschluss betätigbarer Entlüftung im geschlossenen und offenen Zustand.

Die in der Zeichnung dargestellte Überdachung ist zum Wetterschutz und insbesondere Hagelschutz von in parallelen Reihen 10 angeordneten Pflanzenkulturen 12 bestimmt. Sie umfasst eine Mehrzahl von vertikalen Stützen 14, die innerhalb jeder Pflanzenreihe 10 im Abstand voneinander im Boden verankert sind und senkrecht nach oben ragen, sowie jeweils einen längs der Pflanzenreihen 10 über die jeweiligen Stützen gespannten Firstdraht 16 mit paarweise zugeordneten Dachbahnen 18, die über einen Firstreißverschluss 20 unter Freigabe der Pflanzenkulturen 12 firstseitig lösbar sind.

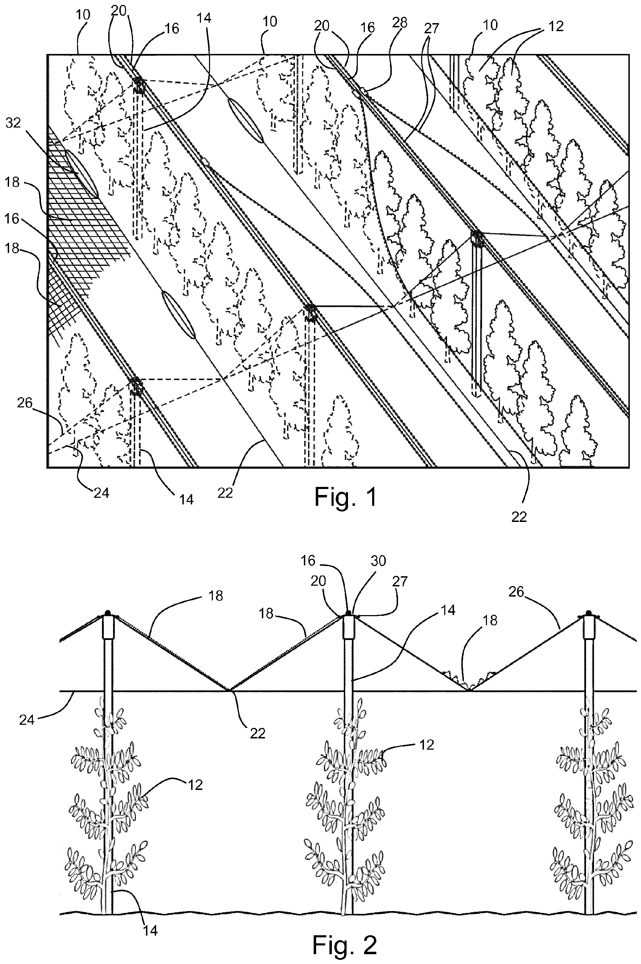

Bei der in Fig. 1 und 2 gezeigten Ausführungsform sind die Dachbahnen 18 in der Form eines Satteldachs aufspannbar. Zu diesem Zweck sind parallel zu den Firstdrähten 16 über den Fahrgassen zwischen den Pflanzenreichen 10 verlaufende Traufdrähte 22 sowie diese stützende Querdrähte 24 und Giebeldrähte 26 als Tragkonstruktion gespannt. Anstelle von metallischen Drähten können auch entsprechend belastungsfeste biegeschlaffe Drähte bzw. Seile eingesetzt werden.

Die Dachbahnen 18 sind aus einem flexiblen Folien- bzw. Gewebematerial gebildet und mittig an dem Traufseil 22 abgespannt. An ihren Längsrändern ist jeweils ein Firstreißverschluss 20 angebracht. Dieser besteht aus zwei streifenförmigen Seitenteilen 27 und einem Schieber 28, mit dem die Zähne der Seitenteile 27 ineinander verhakt und wieder gelöst werden können. Dabei ist jeweils ein firstseitiges Seitenteil 27 über einen Trägerstreifen 30 mit dem betreffenden Firstdraht 16 verbunden. Beim Öffnen der Firstreißverschlüsse 20 gleiten die Dachbahnen 18 unter Schwerkraft selbsttätig über die Giebeldrähte 26 in den Traufbereich, wo sie ggf. außerhalb der Vegetationsperiode über Bandfixierungen in geraffter Form gelagert werden können. Aus der Traufposition lassen sich die Gewebebahnen 18 unter Schließen der Firstreißverschlüsse 20 wieder nach oben in die Firstposition bewegen.

Bei Dachbahnen 18, welche die gesamte Fahrgasse überdecken, können im Traufbereich in Längsrichtung verteilte Durchlassöffnungen 32 zur Ableitung von Hagel oder Regen eingebracht sein. Alternativ ist es auch möglich, die Dachbahnen 18 nur mit der Breite einer Giebelseite auszuführen und an ihren traufseitigen Längsrändern stellenweise mit dem Traufseil 22 zu verbinden.

Die Schieber 28 können mit einem Seilzug von der Fahrgasse zwischen den Pflanzenreihen 10 aus beispielsweise durch eine Bedienperson gezogen werden. Denkbar ist auch eine automatisierte Handhabung, beispielsweise durch einen entlang des Firstdrahtes 16 geführten Zugschlitten (nicht gezeigt).

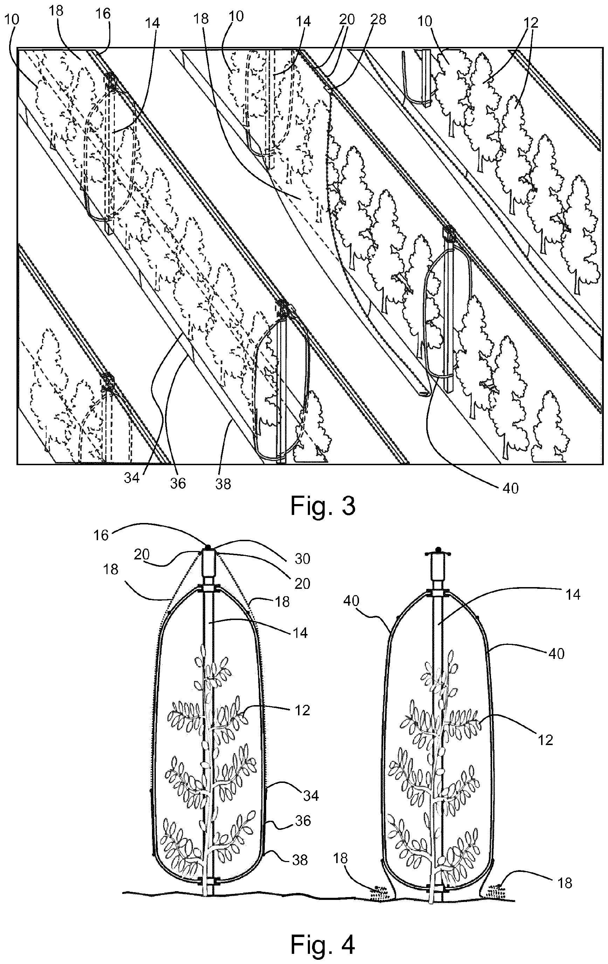

Bei der in Fig. 3 und 4 gezeigten Ausführungsform sind die Dachbahnen 18 an ihrem von dem Firstdraht 16 entfernten unteren Längsrand 34 in einem bodennahen Bereich abgespannt. Im geschlossenen Zustand des Firstreißverschlusses 16 sind die Pflanzenreihen 10 von jeder Dachbahn 18 halbschalig umhüllt (siehe Fig. 4 linke Seite), wobei die Fahrgasse bzw. der Arbeitsbereich zwischen benachbarten Pflanzenreihen 10 nach oben frei bleibt. Zur Verspannung der unteren Längsränder 34 sind gummielastische Expander 36 vorgesehen, die an bodennahen Längsspanndrähten 38 eingehakt sind.

Um die Dachbahnen 18 von den Pflanzenreihen 10 abzuhalten, sind an jeder Stütze 14 zwei C-förmige Leitbügel 40 angebracht, die mit ihren Enden gegeneinander weisen und ggf. schwenkbeweglich gelagert sind. Beim Öffnen der Firstreißverschlüsse 20 sorgen die Leitbügel für ein störungsfreies Abgleiten der Dachbahnen 18 in den Bodenbereich (siehe Fig. 4 rechte Seite). Von dort können die Dachbahnen 18 beim Schließen der Firstreißverschlüsse 20 auch wieder in den aufgespannten Zustand gezogen werden, ohne mit den Pflanzen 12 zu kollidieren.

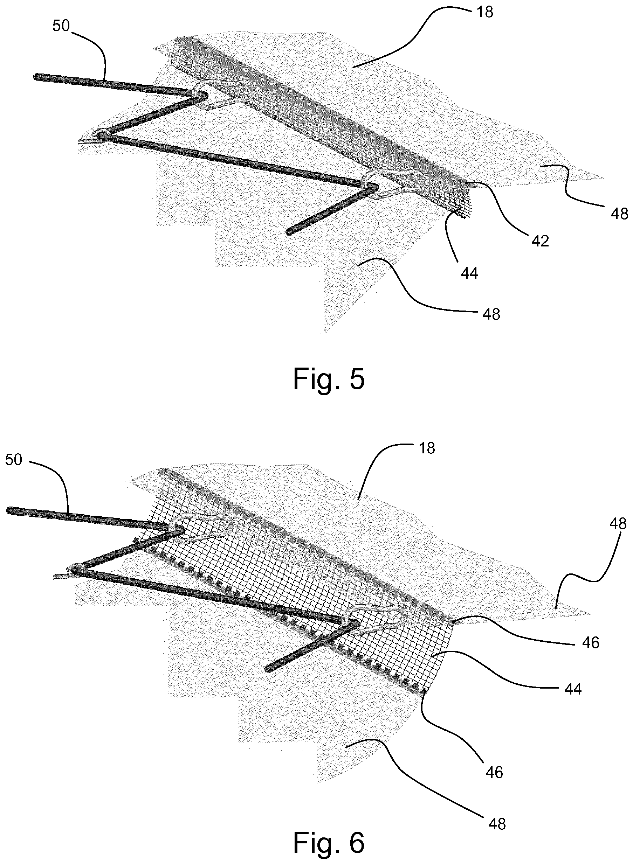

Wie in Fig. 5 und 6 illustriert, kann bei einer Wetterschutzüberdachung ein Reißverschluss 42 auch dazu eingesetzt werden, eine Wärmepufferung bzw. eine Entlüftung des abgeschirmten Bereichs zu ermöglichen. Zu diesem Zweck ist in eine aus einem Folienmaterial bestehende Dachbahn 18 ein Gewebestreifen 44 integriert, an dessen Längsrändern die Seitenteile 46 des Reißverschlusses 42 angebracht sind. Bei geschlossenem Reißverschluss 42 liegen die angrenzenden Segmente 48 der transparenten Dachbahn 18 gegeneinander an, so der Gewebestreifen 44 in Querschnitt gesehen schlaufenförmig geschlossen bleibt und durch Sonneneinstrahlung erwärmte Luft zurückgehalten wird (Fig. 5). Im offenen Zustand wird der Gewebestreifen 44 flächig aufgespannt und somit freigegeben, um eine Ableitung von Warmluft zu ermöglichen. Dabei kann dieser Durchlüftungsbereich noch durch eine mittels Gummiseil 50 selbsttätig aufgespannte Abschirmfolie 50 gegen Eindringen von Niederschlag überdeckt sein.

## Patentansprüche

1. Überdachung für reihenförmig angeordnete Pflanzenkulturen (12) mit mehreren in den Pflanzenreihen (10) verteilt angeordneten Stützen (14), einem längs der Pflanzenreihen (10) über die jeweiligen Stützen (14) gespannten Firstdraht (16) und mindestens einer an dem Firstdraht (16) seitlich über der jeweiligen Pflanzenreihe (10) aufspannbaren, aus einem Folien- und/oder Gewebematerial gebildeten flexiblen Dachbahn (18), **dadurch gekennzeichnet, dass** die Dachbahn (18) an ihrem an dem Firstdraht (16) angeordneten Längsrand einen durchgehenden Firstreißverschluss (20) aufweist, wobei die Dachbahn (18) durch Öffnen des Firstreißverschlusses (20) von dem Firstdraht (16) unter Freigabe der Pflanzenreihe (10) lösbar ist.

2. Überdachung nach Anspruch 1, **dadurch gekennzeichnet, dass** der Firstreißverschluss (20) über ein Trägerband (30) an dem Firstdraht (16) gehalten ist.

3. Überdachung nach Anspruch 1 oder 2, **dadurch gekennzeichnet, dass** beidseitig des Firstdrahts (16) jeweils eine Dachbahn (18) über einen zugeordneten Firstreißverschluss (20) an dem Firstdraht (16) gehalten ist.

4. Überdachung nach einem der Ansprüche 1 bis 3, **gekennzeichnet durch** eine längs des Firstdrahts (16) vorzugsweise automatisch bewegbare Zugvorrichtung (28) zum Öffnen und Schließen des Firstreißverschlusses (20).

5. Überdachung nach einem der Ansprüche 1 bis 4, **dadurch gekennzeichnet, dass** die Dachbahn (18) den Bereich zwischen zwei benachbarten Firstdrähten (16) überspannt und an beiden Längsrändern über einen Firstreißverschluss (20) mit einem Firstdraht (16) verbunden ist.

6. Überdachung nach einem der Ansprüche 1 bis 5, **dadurch gekennzeichnet, dass** die Dachbahn (18) in einem Bereich zwischen benachbarten Firstdrähten mit Durchlassöffnungen (32) zur Ableitung von Hagel oder Regen versehen ist.

7. Überdachung nach einem der Ansprüche 1 bis 6, **dadurch gekennzeichnet, dass** die Dachbahn (18) unter Öffnen des Firstreißverschluss (20) selbsttätig auf eine Tragkonstruktion (22,24) in einen Traufbereich zwischen benachbarten Pflanzenreihen (10) ableitbar ist.

8. Überdachung nach einem der Ansprüche 1 bis 7, **dadurch gekennzeichnet, dass** die Dachbahn (18) über an den Stützen (14) abgespannte und vorzugsweise dachförmig quer zu dem Firstdraht (16) verlaufende Stützdrähte (26) beim Auf- und Abspannen geführt ist.

9. Überdachung nach einem der Ansprüche 1 bis 8, **dadurch gekennzeichnet, dass** an den Stützen (14) quer zu dem Firstdraht (16) abstehende Leitbügel (40) zur Führung der Dachbahn (18) angeordnet sind.

10. Überdachung nach einem der Ansprüche 1 bis 9, **dadurch gekennzeichnet, dass** die Dachbahn (18) an einem von dem Firstdraht (16) entfernten unteren Längsrand in einem bodennahen Bereich vorzugsweise über Gummiseile (36) abgespannt ist, so dass die Pflanzenreihen (10) von jeder Dachbahn (18) im aufgespannten Zustand halbschalig umhüllt sind und der Bereich zwischen benachbarten Pflanzenreihen (10) nach oben frei bleibt.

11. Überdachung nach einem der Ansprüche 1 bis 10, **dadurch gekennzeichnet, dass** die Dachbahn (18) unter Schließen des Firstreißverschlusses (20) in die eine Pflanzenreihe überdeckende aufgespannte Stellung bewegbar ist.

12. Überdachung nach einem der Ansprüche 1 bis 11, **dadurch gekennzeichnet, dass** die Dachbahn (18) einen vorzugsweise als Gewebe gitterförmig durchbrochenen Entlüftungsstreifen (44) aufweist, und dass sich der Entlüftungsstreifen über einen Reißverschluss (42) an seinen Längsrändern schließen und öffnen lässt.

## Claims

1. Roofing for crop plants (12) arranged in rows, having a plurality of supports (14) that are arranged in a manner distributed in the rows (10) of plants, a ridge wire (16) tensioned via the respective supports (14) along the rows (10) of plants, and at least one flexible roofing membrane (18) that is able to be stretched laterally over the respective row (10) of plants at the ridge wire (16) and is formed from a sheet and/or fabric material, **characterized in that** the roofing membrane (18) has, at its longitudinal edge arranged at the ridge wire (16), a continuous ridge zip fastener (20), wherein the roofing membrane (18) is releasable from the ridge wire (16) by opening the ridge zip fastener (20) with the row (10) of plants being uncovered.

2. Roofing according to Claim 1, **characterized in that** the ridge zip fastener (20) is held on the ridge wire (16) via a carrier strip (30).

3. Roofing according to Claim 1 or 2, **characterized in that**, on both sides of the ridge wire (16), a respective roofing membrane (18) is held on the ridge wire (16) via an associated ridge zip fastener (20).

4. Roofing according to one of Claims 1 to 3, **characterized by** a pulling device (28), which is preferably automatically movable along the ridge wire (16), for opening and closing the ridge zip fastener (20).

5. Roofing according to one of Claims 1 to 4, **characterized in that** the roofing membrane (18) spans the region between two adjacent ridge wires (16) and is connected to a ridge wire (16) at both longitudinal edges via a ridge zip fastener (20).

6. Roofing according to one of Claims 1 to 5, **characterized in that** the roofing membrane (18) is provided, in a region between adjacent ridge wires, with passage openings (32) for draining off hail or rain.

7. Roofing according to one of Claims 1 to 6, **characterized in that**, with the ridge zip fastener (20) being opened, the roofing membrane (18) is able to be let down automatically onto a supporting structure (22, 24) in an eave area between adjacent rows (10) of plants.

8. Roofing according to one of Claims 1 to 7, **characterized in that** the roofing membrane (18) is guided, during stretching and bracing, via supporting wires (26) that are braced at the supports (14) and extend preferably in a roof-shaped manner transversely to the ridge wire (16).

9. Roofing according to one of Claims 1 to 8, **characterized in that** guiding brackets (40) for guiding the roofing membrane (18) that protrude transversely to the ridge wire (16) are arranged on the supports (14).

10. Roofing according to one of Claims 1 to 9, **characterized in that** the roofing membrane (18) is braced at a lower longitudinal edge remote from the ridge wire (16) in a region close to the ground, preferably via rubber ropes (36), such that the rows (10) of plants are enveloped by each roofing membrane (18) in the manner of a half-shell in the stretched state and the region between adjacent rows (10) of plants remains free at the top.

11. Roofing according to one of Claims 1 to 10, **characterized in that** the roofing membrane (18) is movable into the stretched position covering a row of plants with the ridge zip fastener (20) being closed.

12. Roofing according to one of Claims 1 to 11, **characterized in that** the roofing membrane (18) has a ventilation strip (44) that is perforated in the manner of a grid, preferably as a fabric, and **in that** the ventilation strip can be opened and closed at its longitudinal edges via a zip fastener (42).

## Revendications

1. Toiture pour cultures de plantes (12) disposées en rangées, comprenant plusieurs poteaux (14) répartis dans les rangées de plantes (10), un fil de faîte (16) tendu le long des rangées de plantes (10) sur les poteaux respectifs (14) et au moins une toile de toit flexible (18) pouvant être tendue sur le fil de faîte (16) latéralement par-dessus la rangée de plantes respective (10), formée d'un matériau en film et/ou en tissu, **caractérisée en ce que** la toile de toit (18) présente au niveau de son bord longitudinal disposé sur le film de faîte (16) une fermeture à glissière de faîte continue (20), la toile de toit (18) pouvant être détachée du fil de faîte (16) par ouverture de la fermeture à glissière de faîte (20) en exposant la rangée de plantes (10).

2. Toiture selon la revendication 1, **caractérisée en ce que** la fermeture à glissière de faîte (20) est retenue au fil de faîte (16) par le biais d'une bande de support (30).

3. Toiture selon la revendication 1 ou 2, **caractérisée en ce que** de part et d'autre du fil de faîte (16) une toile de toit (18) est à chaque fois retenue sur le fil de faîte (16) par le biais d'une fermeture à glissière de faîte associée (20).

4. Toiture selon l'une quelconque des revendications 1 à 3, **caractérisée par** un dispositif de traction (28) pouvant de préférence être déplacé automatiquement le long du fil de faîte (16) pour l'ouverture et la fermeture de la fermeture à glissière de faîte (20).

5. Toiture selon l'une quelconque des revendications 1 à 4, **caractérisée en ce que** la toile de toit (18) recouvre la région entre deux fils de faîte adjacents (16) et est reliée à un fil de faîte (16) au niveau des deux bords longitudinaux par le biais d'une fermeture à glissière de faîte (20).

6. Toiture selon l'une quelconque des revendications 1 à 5, **caractérisée en ce que** la toile de toit (18) est pourvue, dans une région entre des fils de faîte adjacents, d'ouvertures de passage (32) pour évacuer la grêle ou la pluie.

7. Toiture selon l'une quelconque des revendications 1 à 6, **caractérisée en ce que** la toile de toit (18), par ouverture de la fermeture à glissière de faîte (20), peut être évacuée automatiquement sur une construction de support (22, 24) dans une région de gouttière entre des rangées de plantes adjacentes (10).

8. Toiture selon l'une quelconque des revendications 1 à 7, **caractérisée en ce que** la toile de toit (18) est guidée, lors de sa traction et de sa tension, par le biais de fils de support (26) tendus sur les poteaux (14) et s'étendant de préférence en forme de toit transversalement au fil de faîte (16).

9. Toiture selon l'une quelconque des revendications 1 à 8, **caractérisée en ce que** des étriers de guidage (40) faisant saillie transversalement par rapport au fil de faîte (16) sont disposés sur les poteaux (14) pour guider la toile de toit (18).

10. Toiture selon l'une quelconque des revendications 1 à 9, **caractérisée en ce que** la toile de toit (18) est tirée de préférence par le biais de câbles en caoutchouc (36) au niveau d'un bord longitudinal inférieur éloigné du fil de faîte (16) dans une région proche du sol, de telle sorte que les rangées de plantes (10) soient enveloppées en forme de demi-coque par chaque toile de toit (18) dans l'état tendu, et que la région entre les rangées de plantes adjacentes (10) reste exposée vers le haut.

11. Toiture selon l'une quelconque des revendications 1 à 10, **caractérisée en ce que** la toile de toit (18) peut être déplacée dans la position tendue recouvrant une rangée de plantes en fermant la fermeture à glissière de faîte (20).

12. Toiture selon l'une quelconque des revendications 1 à 11, **caractérisée en ce que** la toile de toit (18) présente un ruban de ventilation (44) de préférence en tant que tissu ouvert en forme de treillis, et **en ce que** le ruban de ventilation peut être ouvert et fermé par le biais d'une fermeture à glissière (42) au niveau de ses bords longitudinaux.
